# FASCICULE DE BREVET EUROPEEN

(11) **EP 3 986 747 B1**
(45) Date de publication et mention de la délivrance du brevet: **28.06.2023**
(21) Numéro de dépôt: 20734806.1
(22) Date de dépôt: 28.05.2020
(51) Int. Cl.: B60N 2/30, B60N 2/24, B60N 2/42, B60N 2/427, B60N 2/70, B60N 2/22

(54) **SIEGE POUR VEHICULE**
SITZ FÜR EIN FAHRZEUG
SEAT FOR A VEHICLE

(30) Priorité: 24.06.2019 FR 1906662
(43) Date de publication de la demande: 27.04.2022
(73) Titulaire: NEXTER Systems, 78034 Versailles Cedex (FR)
(72) Inventeur: REYMOND, Angèle, 18023 Bourges (FR); DRESSY, Jean-Claude, 18023 Bourges (FR); VON EUW, Mathias, 18023 Bourges (FR)
(74) Mandataire: Cabinet Chaillot
(86) Numéro de dépôt international: PCT/IB2020/055069
(87) Numéro de publication internationale: WO 2020/260982

(56) Documents cités:
- EP-A1- 2 135 770
- FR-A1- 2 995 841
- FR-A1- 3 067 990

## Description

Le domaine technique de l'invention est celui des sièges pour véhicules.

Afin de transporter des personnels à bord d'un véhicule, il est connu du brevet FR3067990 un siège comportant un dossier textile souple et une assise rigide pivotante entre une position d'assise horizontale et une position repliée verticale. La partie supérieure du dossier est solidarisable avec le véhicule au moyen de crochets. Le dossier peut être affalé afin de donner accès à une partie du véhicule située derrière le dossier telle qu'un compartiment de stockage par exemple.

Un tel siège ne donne pas un niveau de confort très satisfaisant car il n'est pas adaptable à différentes morphologies d'utilisateurs.

L'invention vise à proposer un siège de véhicule adaptable à la morphologie de l'utilisateur.

L'invention vise également un siège pouvant être replié de manière compacte et ordonnée.

Ainsi, l'invention porte sur un siège pour véhicule comportant un dossier destiné à être solidarisé avec le véhicule par une extrémité supérieure au moyen d'au moins un crochet, siège comportant une assise pivotante entre une position dépliée horizontale et une position repliée verticale, assise destinée à être solidarisée avec le véhicule au niveau d'un élément d'articulation, la partie inférieure du dossier étant solidaire de l'assise, siège caractérisé en ce que :
le dossier comporte au moins deux panneaux, un panneau haut et un panneau bas, panneaux destinés à l'appui dorsal d'un occupant, panneaux reliés entre eux par au moins une bande textile, au moins un des panneaux étant solidaire de la bande textile par une fixation autoagrippante de manière à pouvoir ajuster la distance entre les panneaux et donc la hauteur du dossier et aussi pour permettre le repli des panneaux les uns contre les autres d'une position d'usage dépliée à une position repliée le long de l'assise.

Avantageusement, le siège pourra comporter au moins un premier coussin pivotant horizontalement et situé au niveau d'une partie supérieure du panneau haut.

Avantageusement, le siège pourra comporter au moins un second coussin qui est solidarisable avec le dossier par un moyen d'attache autoagrippant comportant une bande de fixation solidaire du dossier et qui s'étend de haut en bas du dossier de façon à pouvoir positionner le second coussin à différentes hauteurs sur le dossier.

Avantageusement, l'assise pourra comporter une plaque d'assise intégrée dans une housse matelassée et amovible relativement à la plaque afin de pouvoir changer ladite housse.

Avantageusement, le panneau haut du dossier pourra être relié aux crochets de solidarisation par au moins une sangle comportant un moyen de réglage de sa longueur et pouvant tendre le dossier entre l'assise et au moins un point de fixation du crochet sur le véhicule.

L'invention sera mieux comprise à la lecture de la description suivante, description faite à la lumière des dessins en annexe, dessins dans lesquels :
[Fig.1] représente une vue de trois quarts d'un siège selon l'invention en position d'usage.
[Fig.2] représente une vue de trois quarts d'une assise de siège déhoussable.
[Fig.3] représente une vue latérale d'un siège selon l'invention en position dépliée.
[Fig.4] représente une vue latérale d'un siège selon l'invention en position repliée.

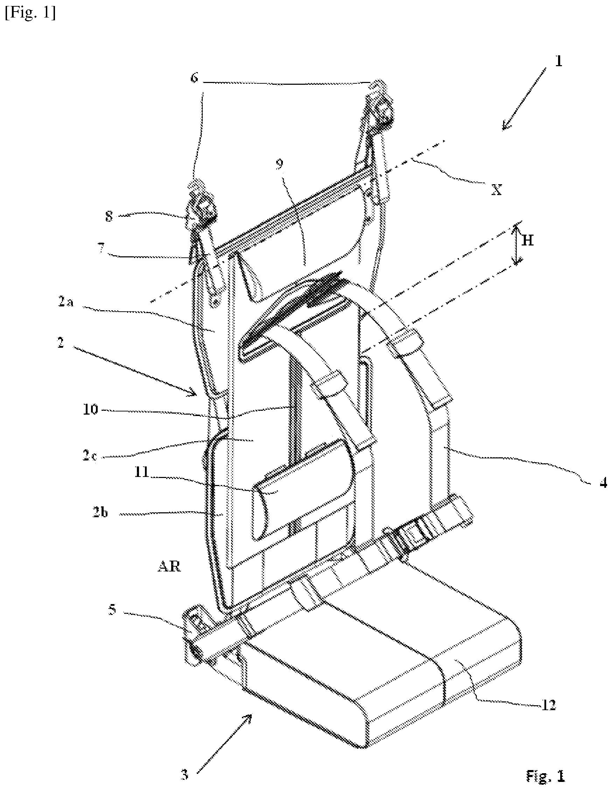

Selon la figure 1, un siège 1 comporte un dossier 2 et une assise 3 ainsi qu'un harnais 4 quatre points destiné à attacher un utilisateur de manière sûre (utilisateur non représenté).

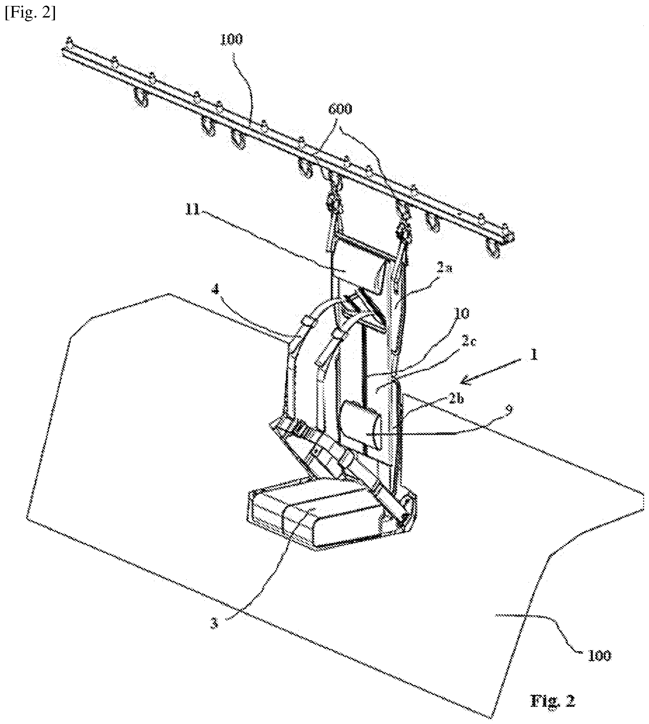

L'assise 3 comporte un élément d'articulation 5 au voisinage de son bord arrière, articulation 5 qui est apte à faire pivoter l'assise 3 d'une position dépliée sensiblement horizontale à une position repliée sensiblement verticale sous l'action d'un ressort de rappel (non visible). L'élément d'articulation 5 permet de solidariser l'assise 3 du siège 1 et la partie basse du dossier 2 avec le véhicule 100 comme visible aux figures 2 à 4.

En position d'utilisation du siège 1 comme à la figure 1, l'assise 3 est maintenue dans cette position, destinée à permettre à un utilisateur de s'assoir, par le poids de cet utilisateur (non représenté) assis sur le siège 1. Le dossier 2 comporte dans sa partie haute des crochets 6 destinés à s'engager dans des points de fixation tels que des anneaux 600 situés dans le véhicule 100 au-dessus du siège 1 (anneaux et véhicule visibles à la figure 2) de manière à suspendre le dossier 2, qui s'étend jusqu'à une partie arrière AR de l'assise 3. Les crochets 6 sont liés à la partie supérieure du dossier 2 par des sangles 7 comportant un moyen de réglage 8 apte à tendre le dossier 1 tel qu'un tendeur 8 à cliquet ou à rochet.

Selon la figure 1, le dossier 2 comporte deux panneaux 2a et 2b tels qu'un panneau haut 2a et un panneau bas 2b juxtaposés et reliés entre eux par une bande textile 2c.

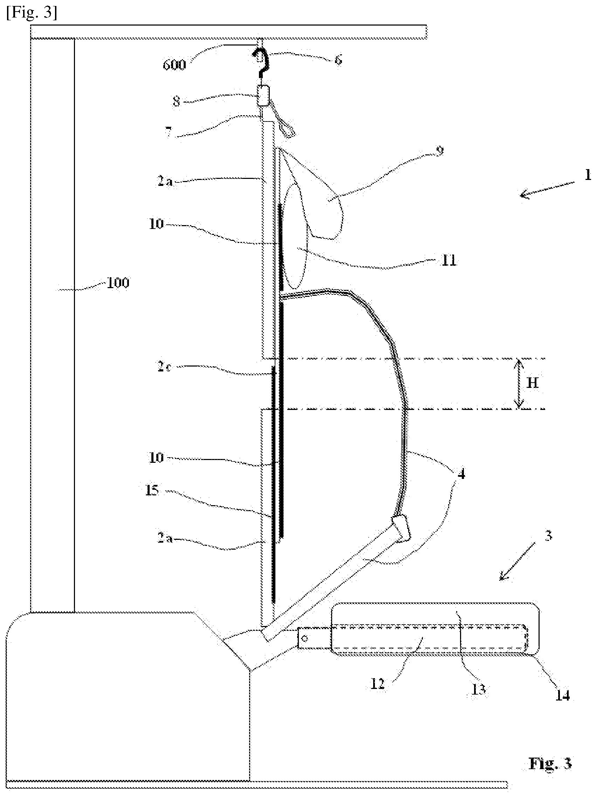

La bande textile 2c est cousue au panneau haut 2a et elle est solidarisable avec le panneau bas 2b grâce à une fixation autoagrippante 15 préférentiellement ou bien par un boutonnage 15 (fixation 15 représentée à la figure 3).

De cette manière, la distance H entre les panneaux 2a et 2b peut être ajustée pour faire varier la longueur totale du dossier 2 selon la morphologie de l'utilisateur. Le panneau haut 2a du dossier 2 comporte un coussin 9 cousu au panneau 2a par son coté supérieur de manière à ce qu'il puisse pivoter autour d'un axe horizontal X formé par la couture.

Sur sa face avant (face amenée à être en contact avec le dos de l'utilisateur assis) la bande textile 2c comporte une bande de fixation 10 qui constitue une partie d'un moyen d'attache autoagrippant. D'une façon classique les moyens d'attache autoagrippants sont constitués de deux parties, l'une en bouclette et l'autre avec des picots, les picots pouvant s'accrocher sur la partie en bouclette de façon détachable et repositionnable.

La bande de fixation 10 fixée au dossier 2 sera de préférence la partie en bouclette du moyen d'attache autoagrippant pour des raisons de confort. La partie comportant des picots sera solidaire d'un second coussin 11. La bande de fixation 10 s'étend du haut du dossier 2 jusqu'au bas de la bande textile 2c ce qui permet le positionnement vertical du second coussin 11, qui porte la partie du moyen d'attache autoagrippant complémentaire (picots), sur le dossier 2 et à différentes hauteurs.

Ce second coussin 11 est destiné à caler le bas du dos de l'utilisateur au niveau lombaire. Il est ainsi possible de placer le second coussin 11 à différentes hauteurs grâce à la bande de fixaiton 10 du moyen d'attache autoagrippant ce qui permet de positionner ce second coussin 11 en fonction de la morphologie de l'utilisateur.

Avantageusement, ce second coussin 11 peut être placé sous le premier coussin 9 en faisant pivoter le premier coussin 9 autour de sa couture le liant au dossier 2. Le second coussin 11 adhère à la partie de bande de fixation 10 qui est située sous le premier coussin 9 comme visible à la figure 3.

De cette manière le confort cervical de l'utilisateur est amélioré puisqu'il lui est possible de faire varier l'épaisseur du soutien cervical apporté par le ou les coussins 9 et/ou 11.

Selon la figure 3, l'assise 3 comporte une plaque d'assise 12 et une housse matelassée 13 amovible. La plaque d'assise 12 est située dans une poche 14 de la housse 13. Le maintien de la housse 13 avec la plaque d'assise 12 peut être assuré là aussi par un moyen d'attache autoagrippant en deux parties non représentées.

Des housses matelassées 13 de différentes largeur et/ou densités peuvent être ainsi facilement adaptées selon le choix de confort souhaité par l'utilisateur.

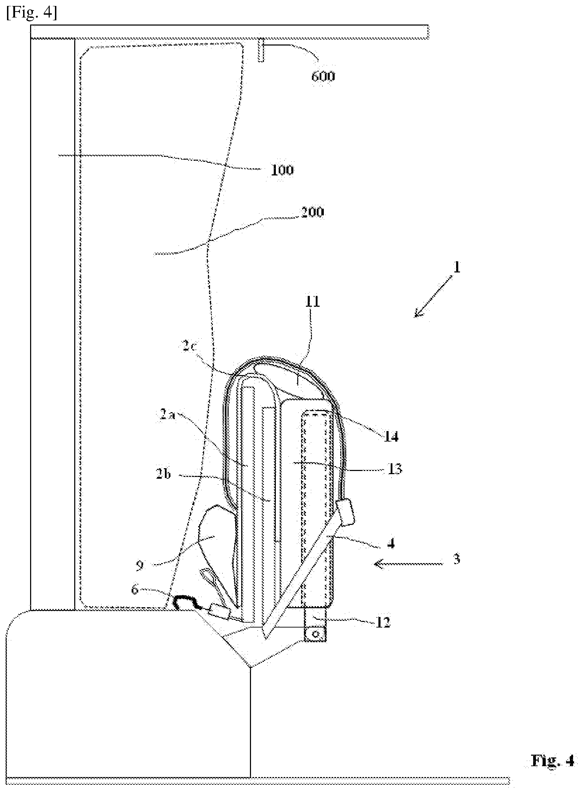

Selon la figure 4, le siège 1 est en position repliée.

Pour cela l'assise 3 est remontée automatiquement en position repliée sensiblement verticale par l'action du ressort agissant sur la plaque d'assise 12.

Les crochets 6 ont été retirés des points de fixation 600 du véhicule 100 et les panneaux 2a et 2b ont été repliés l'un contre l'autre par pivotement au niveau de la bande textile 2c.

Les panneaux 2a et 2b ainsi pliés sont placés verticalement le long de l'assise 3 et le harnais 4 enveloppe alors le siège 1.

On constate que dans cette configuration repliée le dossier 2 ne fait pas obstacle à un éventuel accès à une zone de stockage 200 située derrière le siège 1 et l'ensemble du siège 1 replié est compact et ordonné, évitant ainsi un accidentel entravement d'un passager circulant au voisinage du siège 1.

## Revendications

1. Siège (1) pour véhicule (100) comportant un dossier (2) destiné à être solidarisé avec le véhicule (100) par une extrémité supérieure au moyen d'au moins un crochet (6), siège (1) comportant une assise (3) pivotante entre une position dépliée horizontale et une position repliée verticale, assise (3) destinée à être solidarisée avec le véhicule (100) au niveau d'un élément d'articulation (5), la partie inférieure du dossier (2) étant solidaire de l'assise (3), siège (1) ***caractérisé en ce que* :**
le dossier (2) comporte au moins deux panneaux (2a,2b), un panneau haut (2a) et un panneau bas (2b), panneaux (2a,2b) destinés à l'appui dorsal d'un occupant, panneaux (2a,2b) reliés entre eux par au moins une bande textile (2c), au moins un des panneaux (2a) étant solidaire de la bande textile (2c) par une fixation autoagrippante (15) de manière à pouvoir ajuster la distance entre les panneaux (2a,2b) et donc la hauteur (H) du dossier (2) et aussi pour permettre le repli des panneaux (2a,2b) les uns contre les autres d'une position d'usage dépliée à une position repliée le long de l'assise (3).

2. Siège (1) selon la revendication 1, **caractérisé en ce qu'**il comporte au moins un premier coussin (9) pivotant horizontalement et situé au niveau d'une partie supérieure du panneau haut (2a).

3. Siège (1) selon une des revendications 1 à 2, **caractérisé en ce qu'**il comporte au moins un second coussin (11) qui est solidarisable avec le dossier par un moyen d'attache autoagrippant comportant une bande de fixation (10) solidaire du dossier (2) et qui s'étend de haut en bas du dossier (2) de façon à pouvoir positionner le second coussin (11) à différentes hauteurs sur le dossier (2).

4. Siège (1) selon l'une des revendications 1 à 3, **caractérisé en ce que** l'assise (3) comporte une plaque d'assise (12) intégrée dans une housse matelassée (13), et amovible relativement à la plaque (12) afin de pouvoir changer ladite housse (13).

5. Siège (1) selon l'une des revendications 1 à 4, **caractérisé en ce que** le panneau haut (2a) du dossier (2) est relié aux crochets (6) de solidarisation par au moins une sangle (7) comportant un moyen de réglage (8) de sa longueur et pouvant tendre le dossier (2) entre l'assise (3) et au moins un point de fixation (600) du crochet (6) sur le véhicule (100).

## Patentansprüche

1. - Sitz (1) für ein Fahrzeug (100), umfassend eine Rückenlehne (2), die ausgelegt ist, um mit dem Fahrzeug (100) durch ein oberes Ende mit Hilfe von mindestens einem Haken (6) fest verbunden zu sein, wobei der Sitz (1) eine Sitzfläche (3) umfasst, die zwischen einer horizontalen entfalteten Position und einer vertikalen zusammengefalteten Position schwenkt, wobei der Sitz (3) ausgelegt ist, um mit dem Fahrzeug (100) an einem Gelenkelement (5) fest verbunden zu sein, wobei der untere Teil der Rückenlehne (2) mit der Sitzfläche (3) fest verbunden ist, wobei der Sitz (1) **dadurch gekennzeichnet ist, dass**:
die Rückenlehne (2) mindestens zwei Tafeln (2a, 2b) umfasst, eine obere Tafel (2a) und eine untere Tafel (2b), wobei die Tafeln (2a, 2b) ausgelegt sind, um den Rücken eines Insassen zu stützen, wobei die Tafeln (2a, 2b) untereinander durch mindestens ein Textilband (2c) verbunden sind, wobei mindestens eine der Tafeln (2a) mit dem Textilband (2c) durch eine selbsthaftende Befestigung (15) fest verbunden ist, so dass die Distanz zwischen den Tafeln (2a, 2b) und somit die Höhe (H) der Rückenlehne (2) eingestellt werden kann, und auch, um zu ermöglichen, die Tafeln (2a, 2b) in Bezug aufeinander von einer entfalteten Gebrauchsposition in eine zusammengefaltete Position entlang der Sitzfläche (3) zusammenzufalten.

2. - Sitz (1) nach Anspruch 1, **dadurch gekennzeichnet, dass** er mindestens ein erstes Kissen (9) umfasst, das horizontal schwenkt und sich an einem oberen Teil der oberen Tafel (2a) befindet.

3. - Sitz (1) nach einem der Ansprüche 1 bis 2, **dadurch gekennzeichnet, dass** er mindestens ein zweites Kissen (11) umfasst, das mit der Rückenlehne durch eine selbsthaftende Befestigung fest verbunden werden kann, umfassend ein Befestigungsband (10), das fest mit der Rückenlehne (2) verbunden ist, und das sich an der Rückenlehne (2) von oben nach unten erstreckt, um das zweite Kissen (11) auf verschiedenen Höhen auf der Rückenlehne (2) positionieren zu können.

4. - Sitz (1) nach einem der Ansprüche 1 bis 3, **dadurch gekennzeichnet, dass** die Sitzfläche (3) eine Sitzplatte (12) umfasst, die in einen Polsterbezug (13) integriert und mit Bezug auf die Platte (12) abnehmbar ist, damit der Bezug (13) gewechselt werden kann.

5. - Sitz (1) nach einem der Ansprüche 1 bis 4, **dadurch gekennzeichnet, dass** die obere Tafel (2a) der Rückenlehne (2) mit den Befestigungshaken (6) durch mindestens einen Gurt (7) verbunden ist, der ein Mittel zur Regulierung (8) seiner Länge umfasst und die Rückenlehne (2) zwischen der Sitzfläche (3) und mindestens einem Befestigungspunkt (600) des Hakens (6) auf dem Fahrzeug (100) spannen kann.

## Claims

1. - A seat (1) for a vehicle (100) including a backrest (2) intended to be secured to the vehicle (100) at an upper end by means of at least one hook (6), the seat (1) including a seat portion (3) pivoting between a horizontal unfolded position and a vertical folded position, the seat portion (3) being intended to be secured to the vehicle (100) at a hinge element (5), the lower part of the backrest (2) being secured to the seat portion (3), the seat (1) being **characterised in that**:
the backrest (2) includes at least two panels (2a, 2b), a top panel (2a) and a bottom panel (2b), the panels (2a, 2b) being intended for the back support of an occupant, the panels (2a, 2b) being connected to each other by at least one textile strip (2c), at least one of the panels (2a) being secured to the textile strip (2c) by a hook-and-loop fastener (15) so as to be able to adjust the distance between the panels (2a, 2b) and thus the height (H) of the backrest (2) and also to allow the panels (2a, 2b) to be folded against each other from an unfolded position of use to a position folded along the seat (3).

2. - The seat (1) according to claim 1, **characterised in that** it includes at least a first horizontally pivoting cushion (9) located at an upper part of the top panel (2a).

3. - The seat (1) according to any one of claims 1 to 2, **characterised in that** it includes at least a second cushion (11) that can be secured to the backrest by a hook-and-loop fastening means including a fastening strip (10) that is secured to the backrest (2) and extends from the top to the bottom of the backrest (2) so as to be able to position the second cushion (11) at different heights on the backrest (2).

4. - The seat (1) according to any one of claims 1 to 3, **characterised in that** the seat portion (3) includes a seat baseplate (12) integrated inside a padded cover (13) removable relative to the baseplate (12) in order to be able to change said cover (13).

5. - The seat (1) according to any one of claims 1 to 4, **characterised in that** the top panel (2a) of the backrest (2) is connected to the securing hooks (6) by at least one strap (7) including a means (8) for adjusting its length and capable of tensioning the backrest (2) between the seat portion (3) and at least one point of attachment (600) of the hook (6) on the vehicle (100).
